# EUROPEAN PATENT SPECIFICATION

(11) **EP 2 316 687 B1**
(45) Date of publication and mention of the grant of the patent: **30.05.2012**
(21) Application number: 10170561.4
(22) Date of filing: 23.07.2010
(51) Int. Cl.: B60K 26/02, G05G 1/445, G05G 5/03

(54) **Device for adjusting the movement load of the control pedal for a vehicle**
Vorrichtung zum Einstellen der Bewegungslast des Gaspedals eines Kraftfahrzeugs
Dispositif de réglage de la charge de mouvement de la pédale de commande d'un véhicule

(30) Priority: 27.10.2009 IT TO20090821
(43) Date of publication of application: 04.05.2011
(73) Proprietor: Plastic Components and Modules Automotive S.p.A., 10095 Grugliasco (TO) (IT)
(72) Inventor: Miletto, Beniamino, 10040, Volvera (TO) (IT); Cavaglia', Renato, 10040, Volvera (TO) (IT)
(74) Representative: Rondano, Davide

(56) References cited:
- EP-A2- 1 154 347
- DE-A1- 19 939 809
- US-A1- 2009 173 587

## Description

The present invention refers to a device for adjusting the movement load of a control pedal for a vehicle. In particular, the present invention comprises a device for adjusting the stroke of a control pedal of the accelerator.

There are known accelerator pedals for vehicles wherein the presence of devices adapted to increase the mechanical force needed to continue with the pedal stroke starting from a predefined point along the stroke of the pedal itself, technically known as "Kick-Down" system.

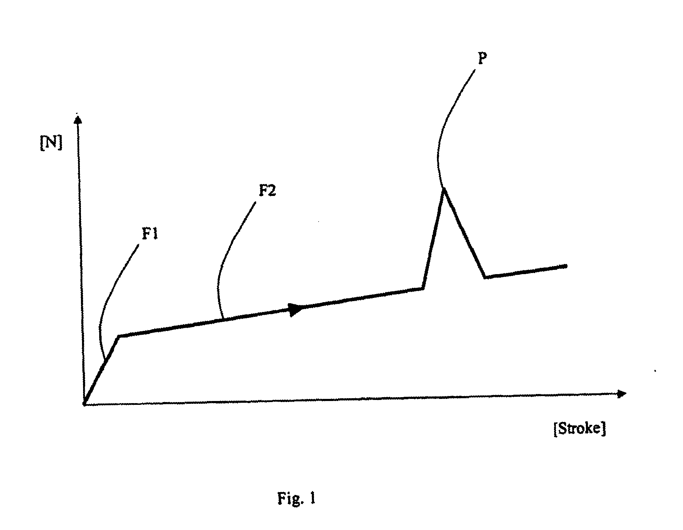

In Figure 1 it is shown a typical trend of the mechanical force required for carrying out the complete stroke of an accelerator pedal.

As it can be noticed, the trend presents a first rising front F1 and a second front P2 having a lower slope and a higher stroke with respect to the first front. At about two thirds of the second front, it is highlighted a peak P caused by the action of the device able to increase the mechanical force needed to continue with the stroke of the pedal, starting from a predefined point along the stroke of the pedal itself.

In order to obtain this increase or peak P, different devices have been proposed, all of them realized through extremely complicated and sometimes also expensive and long-term unreliable mechanisms.

This kind of mechanisms produce a force hysteresis in the pedal in order to ensure the correct, desirable pedal "feel"

These mechanisms are described in patent applications US2009/173587 A1, EP1154347 A2 and DE 1993 9809 A1, whereby US 2009/173587 shows all features of the pre-amble of claim 1.

There are also known resistance mechanisms for the accelerator pedal for generating an opposing mechanism force.

The present invention proposes a device for adjusting of the stroke of a control pedal for a vehicle which is simple, reliable and cheap.

An aspect of the present invention relates to a device for adjusting of the stroke of a control pedal for a vehicle having the characteristics of the attached claim 1.

Further additional features of the device itself are contained in the independent claims.

The features and the advantages of the device according to the present invention will be highlighted by the following description, exemplificative and nonlimiting, made with reference to the attached figures which show respectively:
- Figure 1 shows a curve of the trend of the force needed to carry out the complete stroke of a pedal provided with the device according to the present invention;

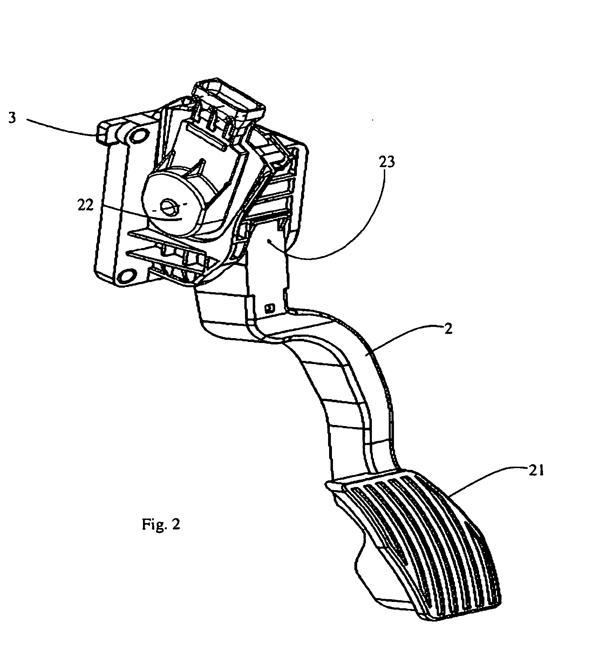

- Figure 2 shows in perspective view a pedal provided with the device according to the present invention;
- Figures 3a, 3b and 3c show the pedal in the different positions respectively.

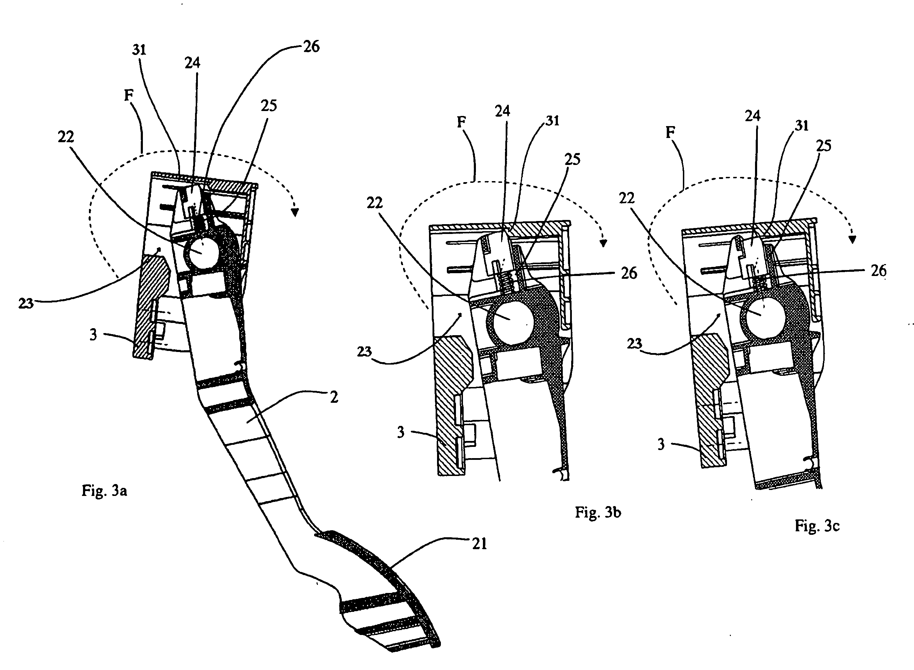

With reference to the mentioned figures, a pedal of this kind traditionally comprises a pedal arm 2 provided at its lower end with pedals 21 and constrained (through a pin 22) in an articulated way to its opposite or upper end 23, with a pedal support 3 adapted to be constrained to an end wall of the vehicle. The pedal arm carries out a predetermined rotation stroke around the pin (highlighted by arrow F in figures 3a, 3b and 3c), as a function of a pressure on the pedals, up to reach a conventional end stroke device.

The pedal body is usually provided with one or more striking springs which controls the return to the starting position of the pedal body itself.

The device according to the present invention essentially comprises a projecting part positioned on upper portion 23 of the pedal arm that during the stroke of the pedal body to a predetermined position, encounters a contrast surface 31 realized on pedal support 3. This projecting part is formed in such a way as to be retractable, when submitted to a predetermined pressure, higher than the pressure that is exerted on the pedals for carrying out the stroke from the starting point up to the contact between the projecting part and contrast surface 31. Once the projecting part has been retracted on the basis of the upper pressure exerted on the pedals, the stroke of the pedal body starts again with the same strength preceding the peak, up to the end stroke.

Said movable projecting comprises a sliding block 24, which slides in a groove 25 provided on the pedal body. Elastic means, such as for example an helical spring 26, connect the sliding block to the base of the groove and determine the entity of the pressure needed for the retractable movement of the sliding block.

Said sliding block is preferably provided with a front surface inclined with respect to the sliding direction of the sliding block itself, in order to better striking the contrast surface.

These elastic means can advantageously be adjustable in order to vary the needed mechanical load; furthermore, also the slopes of contrast surfaces 31 and of sliding block 24 can vary for the same purpose.

## Claims

1. A device for adjusting the movement load of the control pedal for a vehicle, said pedal comprising a pedal arm (2) having a longitudinal axis and being provided at its lower end with a pedal (21) and constrained in an articulated way at its opposite or upper end (23) with a pedal support (3), the pedal arm being adapted to realize a predetermined rotation stroke according to a pressure on the pedals, the pedal further comprises one or more striking springs which control the return to the starting position of the pedal arm (2) itself; said device essentially comprises a projecting part substantially formed on the upper portion (23) of the pedal arm (2) which during the stroke of the pedal body at a predetermined position, encounters a contrast surface (31), made on the pedal support (3) and having a predetermined inclination with respect to the projecting part, said projecting part being retractable, when submitted to a predetermined pressure, higher than the pressure that is exerted on the pedals for carrying out the stroke from the starting point up to the contact point between the projecting part and the contrast surface (31) and, after the retraction of the projecting part overcoming the contrast surface, after the strength peak, the stroke of pedal (2) starts again with the same strength preceding the peak, up to an end stroke, **characterized in that**:
the projecting portion is retractable in a direction substantially parallel to the longitudinal axis of the pedal arm (2).

2. Device according to claim 1, wherein said movable projecting part comprises a sliding block (24) that slides in a groove (25) provided on the pedal body and elastic means that connect the sliding block to the bottom of the groove and determine the entity of the pressure needed for the retractable movement of the sliding block.

3. Device according to claim 2, wherein said elastic means comprise an helical spring (26).

4. Device according to claim 2, wherein said sliding block is provided with a front surface inclined with respect to the sliding direction of the sliding block itself.

5. Device according to claim 2, wherein said elastic means can be adjusted in order to vary the needed mechanical load.

## Patentansprüche

1. Vorrichtung zum Einstellen der Bewegungslast des Gaspedals eines Kraftfahrzeugs, wobei das Pedal einen Pedalarm (2) aufweist, der eine Längsachse hat und an seinem unteren Ende mit einem Pedal (21) versehen ist und an seinem gegenüberliegenden oder oberen Ende (23) mit einer Pedalhalterung (3) gelenkig festgelegt ist, wobei der Pedalarm angepasst ist, eine vorgegebene Drehbewegung entsprechend einem Druck auf die Pedale auszuführen, wobei das Pedal ferner eine oder mehr Anschlagfedern aufweist, welche die Rückkehr in die Ausgangsstellung des Pedalarms (2) beeinflussen; die Vorrichtung weist hauptsächlich einen im Wesentlichen auf dem oberen Teil (23) des Pedalarms (2) gebildeten, vorspringenden Teil auf, der während der Bewegung des Pedalkörpers in einer vorgegebenen Stellung auf eine Gegenfläche (31) trifft, die auf der Pedalhalterung (3) gebildet wird und eine vorgegebene Neigung in Bezug auf den vorspringenden Teil hat, wobei der vorspringende Teil zurückziehbar ist, wenn er einem vorgegebenen Druck ausgesetzt wird, der höher ist als der für die Ausführung der Bewegung vom Ausgangspunkt bis zum Berührungspunkt zwischen dem vorspringenden Teil und der Gegenfläche (31) auf die Pedale ausgeübte Druck, und nach dem Zurückziehen des vorspringenden Teils unter Überwindung der Gegenfläche, nach der Kraftspitze, beginnt die Bewegung des Pedals (2) wieder mit derselben Kraft wie vor der Spitze, bis zu einer Endlage, **dadurch gekennzeichnet, dass**:
der vorspringende Teil in eine Richtung im Wesentlichen parallel zur Längsachse des Pedalarms (2) zurückziehbar ist.

2. Vorrichtung nach Anspruch 1, wobei der bewegliche vorspringende Teil einen Gleitblock (24), der in einer im Pedalkörper bereitgestellten Vertiefung (25) gleitet, und elastische Einrichtungen aufweist, die den Gleitblock mit der Unterseite der Vertiefung verbinden und die Einheit des Drucks bestimmen, der für die Rückzugsbewegung des Gleitblocks benötigt wird.

3. Vorrichtung nach Anspruch 2, wobei die elastischen Einrichtungen eine Schraubenfeder (26) aufweisen.

4. Vorrichtung nach Anspruch 2, wobei der Gleitblock mit einer vorderen Oberfläche versehen ist, die in Bezug auf die Gleitrichtung des Gleitblocks geneigt ist.

5. Vorrichtung nach Anspruch 2, bei der die elastischen Einrichtungen eingestellt werden können, um die benötigte mechanische Last zu verändern.

## Revendications

1. Dispositif de réglage de la charge de mouvement de la pédale de commande d'un véhicule, ladite pédale comprenant un bras de pédale (2) ayant un axe longitudinal et muni à son extrémité inférieure d'une pédale (21) et contraint avec articulation à son extrémité opposée ou extrémité supérieure (23) avec un support de pédale (3), le bras de pédale étant adapté pour effectuer une course par rotation prédéterminée en fonction d'une pression sur la pédale, tandis que la pédale comprenant en outre un ou plusieurs ressorts d'amorçage qui commandent le retour à la position de départ du bras de pédale (2) lui-même ; ledit dispositif comprend essentiellement une partie en projection substantiellement formée sur la portion supérieure (23) du bras de pédale (2) qui, pendant le déplacement du corps de pédale sur une position prédéterminée, rencontre une surface de contraste (31), ménagée sur le support de pédale (3) et ayant une inclinaison prédéterminée par rapport à la partie en projection, ladite partie en projection étant rétractable lorsqu'elle est soumise à une pression prédéterminée, supérieure à la pression qui est exercée sur les pédales pour la réalisation du déplacement depuis le point de départ jusqu'au point de contact entre la partie en projection et la surface de contraste (31) et, après rétractation de la partie en projection surmontant la surface de contraste, après le pic de force, le déplacement de la pédale (2) démarre à nouveau avec la même force que celle précédant le pic, jusqu'à une course finale,
**caractérisé en ce que**:
la portion en projection est rétractable, dans une direction substantiellement parallèle à l'axe longitudinal du bras de pédale (2).

2. Dispositif selon la revendication 1, dans lequel ladite partie en projection mobile comprend une pièce coulissante (24) qui coulisse dans une gorge (25) prévue dans le corps de pédale et des moyens élastiques qui relient la pièce coulissante au fond de la gorge et déterminent l'importance de la pression nécessaire pour le mouvement de rétractation de la pièce coulissante.

3. Dispositif selon la revendication 2, dans lequel lesdits moyens élastiques comprennent un ressort hélicoïdal (26).

4. Dispositif selon la revendication 2, dans lequel ladite pièce coulissante est munie d'une surface frontale inclinée par rapport à la direction de coulissement de la pièce coulissante proprement dite.

5. Dispositif selon la revendication 2, dans lequel lesdits moyens élastiques peuvent être ajustés pour faire varier la charge mécanique nécessaire.
